# EUROPÄISCHE PATENTSCHRIFT

(11) **EP 0 744 014 B1**
(45) Veröffentlichungstag und Bekanntmachung des Hinweises auf die Patenterteilung: **30.07.1997**
(21) Anmeldenummer: 95910389.6
(22) Anmeldetag: 06.02.1995
(51) Int. Cl.: F28F 9/02

(54) **WÄRMETAUSCHER**
HEAT EXCHANGER
ECHANGEUR DE CHALEUR

(30) Priorität: 09.02.1994 DE 4404068
(43) Veröffentlichungstag der Anmeldung: 27.11.1996
(73) Patentinhaber: Engelhardt, Wolfgang, 40545 Düsseldorf (DE)
(72) Erfinder: Engelhardt, Wolfgang, D-40545 Düsseldorf (DE); Colombo, Massimo, I-22050 Montevecchia (IT)
(74) Vertreter: Palgen, Peter, Dr. Dipl.-Phys.
(86) Internationale Anmeldenummer: DE9500147
(87) Internationale Veröffentlichungsnummer: WO9522037

(56) Entgegenhaltungen:
- US-A- 4 247 530
- US-A- 4 858 684

## Beschreibung

Die Erfindung bezieht sich auf einen Wärmetauscher der dem Oberbegriff des Anspruchs 1 entsprechenden Art.

Derartige Wärmetauscher sind beispielsweise aus der DE-OS 27 25 045, der DE-PS 29 48 201 und der US-PS 3 364 983 bekannt. Ausgangspunkt für die Erfindung sind Wärmetauscher dieser Art gewesen, die in Anlagen zur Rußherstellung verwendet werden. Der Ruß dient in der Hauptmenge als Füllstoff für die Reifenindustrie. Er wird durch unterstöchiometrische Verbrennung eines Schweröl-Rückstandes (Feed-Stock) gewonnen. Das bei der Verbrennung anfallende Prozeßgas führt den Ruß in feindisperser Form mit sich fort und wird durch die Rohre des Wärmetauschers geleitet. Die Eintrittstemperatur des Prozeßgases in den Wärmetauscher liegt etwa im Bereich von 800°C bis 1200°C, meist im Bereich von 800 bis 1050°C. Beim Durchtritt durch die Rohre wird das Prozeßgas unter Wärmetausch auf Temperaturen in der Größenordnung von 550 bis 650°C abgekühlt. Das Austauschmedium, im allgemeinen Kühlluft (Prozeß-Luft), strömt am Außenumfang der Rohre entgegen der Prozeßgasrichtung entlang und erwärmt sich dabei von beispielsweise 40 bis 60°C auf 700 bis 800°C. So aufgeheizte Luft kann als vorgewärmte Verbrennungsluft eingesetzt werden.

Der von dem Prozeßgas mitgeführte Ruß hat bei bestimmten Rußsorten die Tendenz sich an den umgebenden Begrenzungsflächen abzusetzen und zu verstopfen. Dies gilt insbesondere für die durchströmten Rohre, denen deshalb eine Reinigungsvorrichtung zugeordnet ist, mittels deren in regelmäßigen Abständen ein Dampfstoß oder sonstiger Druckgasstoß durch die Rohre geschickt werden kann, der den gerade abgesetzten Ruß von der Wandung ablöst und mitreißt. Derartige Reinigungsvorrichtungen sind aus den drei erwähnten Schriften zu entnehmen.

Die Rohre und damit der gesamte Wärmetauscher haben in der Praxis eine erhebliche Länge von etwa 8 bis 12 Meter und sind in einem Bündel von etwa 50 bis 100 in einem im allgemeinen zylindrischen kesselartigen Gehäuse vereinigt. Die Aggregate können stehend oder liegend angeordnet sein.

Die Rußherstellung war zwar der Ausgangspunkt der Erfindung, doch können ähnliche Probleme auch bei anderen chemischen und Verbrennungsprozessen auftreten, bei denen zu kühlende Prozeßgase mit feindispersen Feststoffanteilen anfallen.

Ein kritischer Punkt sind bei derartigen Wärmetauschern die auf der Seite der Prozeßgaseinlaßkammer gelegenen Rohrböden, die sich in einem Hochtemperaturbereich befinden und dabei auf ihren beiden Seiten eine Temperaturdifferenz von mehreren 100°C auszuhalten haben. Hinzu kommt, daß die geometrische Gestalt der Rohrböden als vielfach gelochte Platte für das Ertragen von thermischen Spannungen ungünstig ist. Es ist daher in der Vergangenheit immer wieder zu Rissen in den Rohrböden gekommen. Ein solches Ereignis führte, da einerseits Luft, andererseits kohlenstoffhaltiges Gas anstehen und hohe Temperaturen vorliegen, zu heftigen Bränden innerhalb des Wärmetauschers mit baldigem Ausfall desselben. Bei einem solchen Ereignis muß natürlich auch die gesamte vor- und nachgeschaltete Produktionslinie stillgesetzt werden. Der dadurch entstehende Schaden geht weit über den reinen Austausch des Wärmetauschers hinaus, der für sich schon ein großes Aggregat mit einem entsprechenden Investitionsaufwand darstellt.

Aus der dem Oberbegriff des Anspruchs 1 zugrundeliegenden DE-OS 22 23 805 ist es bereits bekannt, die Temperaturbelastung des auf der Seite der Prozeßgaseinlaßkammer gelegenen Rohrbodens zu mindern, indem er als von einem Kühlmedium durchströmter Doppelrohrboden ausgebildet wird. Einzelheiten des Kühlmediums und seiner Führung sind nicht angegeben. Wenn das Kühlmedium strömendes Wasser ist, ist die Kühlleistung im Bereich des Doppelbodens beschränkt, weil sie von dem beschränkten Wärmeübergang von dem Stahl der Rohre und der Böden auf das flüssige Wasser abhängt.

Der Erfindung liegt die Aufgabe zugrunde, die Betriebssicherheit eines gattungsgemäßen Wärmetauschers durch Verbesserung der Kühlung im Bereich des Doppelrohrbodens zu verbessern.

Diese Aufgabe wird durch die in Anspruch 1 wiedergegebene Erfindung gelöst.

Durch die Siedewasserkühlung kann erreicht werden, daß durch den Dampf immer wieder Wasser oder ein Wasser/Dampf-Gemisch gegen den oberen Rohrboden des Doppelrohrbodens geschleudert wird, welches dort verdampft und über die Verdampfungswärme wesentliche Wärmemengen gerade im Bereich der kritischen Schweißstellen der Rohre entzieht. Die Temperaturlage des auf der Prozeßgas-Einlaßseite gelegenen Doppelrohrbodens wird hierdurch insgesamt erheblich erniedrigt, wodurch das Material in einen Bereich mit besseren mechanischen Eigenschaften gelangt. Die Siedewasserkühlung wird durch die partielle Wasserfüllung des Doppelrohrbodens realisiert.

Die beiden einzelnen Rohrböden des Doppelrohrbodens liegen hierbei vertikal übereinander, und es steht das Kühlwasser in dem Zwischenraum zwischen den Rohrböden bzw. über dem unteren Rohrboden bis zu einer gewissen Höhe. Die unteren Enden der Rohre führen vertikal durch den Doppelboden. Um den Druck in dem Doppelboden steuern zu können, wird der Dampf extern mittels Luft oder Wasser kondensiert. Die dabei gewonnene Wärme kann anderweitig weiterverwendet werden. Das Kondensat wird in den Doppelboden zurückgeführt, so daß die Kühlwassermenge des Doppelbodens von selbst im Kreis umläuft und keine Pumpen erforderlich sind.

Die Steuerung der Kühlleistung kann in der in Anspruch 2 wiedergegebenen Weise erfolgen.

Da die thermische Beanspruchung der Rohre in der Nähe des Gaseintritts am höchsten ist, empfiehlt es sich, daß im Bereich des Doppelrohrbodens lose eingesetzte innere Schutzhüllen gemäß Anspruch 3 vorhanden sind, die leicht austauschbar sind und auf dem ersten Stück des Strömungsweges, wo die höchsten Temperaturen vorliegen, den direkten Angriff des Prozeßgases an dem Innenumfang der Rohre unterbinden.

Um bei einer Auswechslung der Rohre keine aufwendigen, mit Schneidarbeiten einhergehenden Demontagen an dem Doppelrohrboden vornehmen zu müssen, ist es von Vorteil, wenn die Rohre im Bereich des Doppelbodens von mit den beiden Rohrböden des Doppelrohrbodens dicht verbundenen Trennrohren umgeben sind (Anspruch 4).

Der Doppelrohrboden mit den ihn durchsetzenden Trennrohren ist eine in sich geschlossene Einheit, an der die langen Wärmetauscher-Rohre leicht ausgewechselt werden können.

Die Trennrohre haben aber noch die zusätzliche Aufgabe, den Wärmeübergang von den Rohren in ihrem Anfangsbereich in das Kühlwasser in dem Doppelrohrboden zu verlangsamen, wozu die Ausgestaltung nach Anspruch 5 beiträgt.

Die Siedewasserkühlung kann im einzelnen gemäß Anspruch 6 ausgeführt sein.

Das Kühlwasser in dem Doppelrohrboden kann durch den Durchlaß am unteren Rand der Tülle in den Raum zwischen Tülle und Trennrohr eintreten, verdampft durch die Berührung mit dem unteren Teil des heißen Trennrohrs, worauf der gebildete Dampf in dem engen Zwischenraum zwischen Tülle und Trennrohr nach oben schießt und das mitgerissene Wasser/Dampf-Gemisch für eine wirksame Wärmeabfuhr von dem Außenumfang des Trennrohrs sorgt und die thermisch hochbelastete Schweißstelle des Trennrohrs in dem oberen Rohrboden des Doppelrohrbodens kühlt.

Anspruch 8 gibt an, wie das Kühlmedium, meist Kühlluft, zu einer größeren Wirksamkeit gebracht werden kann, indem es nämlich durch den ringförmigen Zwischenraum zwischen dem Rohr und dem Mantel hindurchgeleitet wird und wie das Kühlmedium in diesen Zwischenraum hinein- und aus diesem wieder herausgebracht werden kann.

Der Mantel ist ein weiteres Rohr, das das jeweilige Wärmetauscherrohr normalerweise konzentrisch mit einem Abstand umgibt, der zwischen den beiden Rohren einen genügenden Strömungsquerschnitt für das Kühlmedium beläßt. Der Innendurchmesser des Mantels kann beispielsweise etwa das 1,2- bis 1,5-fache des Außendurchmessers des jeweiligen Rohres betragen. Die zusätzliche Wärmeübertragungsfläche am Innenumfang des Mantels intensiviert den Wärmeübergang von den Rohren an das Kühlmedium verglichen mit dem Fall, daß die Rohre ohne Mantel im Strom des Kühlmediums stehen. Der Mantel heizt sich selbst auf und strahlt seinerseits und reflektiert außerdem von dem Außenumfang der Rohre ausgesandte Wärmestrahlung. Es wurde ermittelt, daß durch das bloße Vorhandensein der rohrförmigen Mäntel sich die Wärmeübertragungsleistung deutlich vergrößern läßt.

Im Prinzip kann der Zwischenraum zwischen den Rohren und den Mänteln im Gleichstrom zu den Rohren oder im Gegenstrom durchströmt werden. Aus Gründen der Vermeidung zu großer Temperaturdifferenzen im Bereich des ohnehin hoch belasteten Doppelrohrbodens empfiehlt sich aber im allgemeinen der Gegenstrom (Anspruch 9).

Anspruch 10 beschreibt eine strömungsgünstige Einführung des Kühlmediums in den Zwischenraum.

Eine wichtige Ausgestaltung der Mantelanordnung ist Gegenstand der Ansprüche 11 bis 13.

Durch die zusätzlichen Wärmeübertragungsflächen in dem Zwischenraum läßt sich die Wärmeübertragungsleistung gegenüber mantellosen Rohren um bis zu 20% vergrößern, was bedeutet, daß bei gleicher unterstellter Wärmeübertragungsleistung die Rohre und der ganze Wärmetauscher bis zu 20% kürzer gemacht werden können. Bei der großen Länge des Wärmetauschers von 8 bis 12 m ist dies ein wesentliches wirtschaftliches Argument.

Zwischen dem kalten und dem warmen Zustand der Rohre liegen etwa 1000°C. Bei der Länge der mit dem Doppelrohrboden festverbundenen Rohre ergeben sich Verlagerungen am oberen Ende der Rohre durch unterschiedliche thermische Ausdehnung der Rohre und des umgebenden Gehäuses in der Größenordnung von 40 mm. Hierzu sind Kompensatoren gemäß Anspruch 14 zweckmäßig, z.B. die bekannten Metallbalkkompensatoren.

Eine weitere wichtige Ausgestaltung des erfindungsgemäßen Wärmetauschers ist eine Dampfreinigungsvorrichtung nach Anspruch 15, die für sich genommen allerdings bei Wärmetauschern bekannt ist, wie die drei eingangs genannten Schriften zeigen.

Ansprüche 16 und 17 geben alternative Möglichkeiten der Anordnung der Dampfreinigungsvorrichtung wieder.

Die aus Gründen der Einfachheit und aus Gründen der problemlosen Integration in einen siedewassergekühlten Doppelrohrboden bevorzugte Ausführungsform ist Gegenstand des Anspruchs 18.

Die Heranführung der Dampfzuleitung durch die Prozeßgaseinlaßkammer, in der die hohen Temperaturen des eintretenden Prozeßgases herrschen, beansprucht die Rohre der Dampfzuleitung erheblich.

Aus diesem Grund empfiehlt sich die Konstruktion nach Anspruch 19, die im Einzelnen nach Anspruch 20 ausgestaltet sein kann und den Vorteil bringt, daß nur das letzte kurze Stück der Dampfzuleitung vor der Dampfdüse in der Prozeßgaseinlaßkammer verlaufen muß.

Eine wichtige Ausgestaltung dieser Anordnung ist das Mantelrohr des Anspruchs 21, welches die Dampfzuleitung mit radialem Abstand umgibt, so daß sich ein Zwischenraum auftut, der sich mit dem in dem Doppelrohrboden stehenden Heißwasser füllt. In dem in der Prozeßgaseinlaßkammer verlaufenden letzten Stück des Mantelrohrs verdampft dieses Wasser augenblicklich und schießt als Dampf oder Wasser/Dampf-Gemisch durch das Steigrohr in den Dampfraum des Doppelrohrbodens hinein, weil der Strömungswiderstand für das Wasser bzw. das Wasser/Dampf-Gemisch auf dieser Seite bei entsprechend angepaßten Querschnitten geringer ist. Auf diese Weise wird der Rohrbogen und der Düsenbereich ständig von Heißwasser bzw. Dampf bzw. einem Wasser/Dampf-Gemisch durchströmt und gekühlt. Der Transport dieses Kühlmediums bedarf keiner äußeren Pumphilfe.

Um einem erodierenden Angriff des an dem in der Prozeßgaseinlaßkammer verlaufenden Teil des Rohrbogens des Mantelrohrs und auch der Düse hintanzuhalten, empfiehlt es sich, diesen Bereich mit einer entsprechenden Isolierung zu umgeben.

Damit, wenn an dem in der Prozeßgaseinlaßkammer verlaufenden Teil des Mantelrohrs oder des Steigrohrs ein Schaden auftritt, sich der Doppelrohrboden nicht entleert, kann das doppelrohrbodenseitige Ende des Mantelrohrs in der in Anspruch 23 festgehaltenen Weise als Überlauf herangezogen werden.

Um die gewünschte Durchströmung des Zwischenraums zwischen Mantelrohr und Dampfzuleitung und des anschließenden Steigrohrs zu fördern, empfiehlt sich ein Querschnittsverhältnis nach Anspruch 24.

Die dem heißen einströmenden Prozeßgas zugewandte Seite des der Prozeßgaseinlaßkammer zugewandten Rohrbodens des Doppelrohrbodens ist thermisch hoch belastet und weist zweckmäßig eine feuerfeste Verkleidung auf (Anspruch 25), die in einer praktikablen Ausführungsform aus regelmäßig geformten feuerfesten Formkörpern bestehen kann (Anspruch 26), beispielsweise aus Sechsecksteinen, die in der Mitte eine Öffnung für den Zugang zu dem jeweiligen Rohr des Wärmetauschers aufweisen.

In der Zeichnung sind Ausführungsbeispiele der Erfindung dargestellt.
Fig. 1 zeigt einen Vertikalschnitt durch einen aufrechten Wärmetauscher;
Fig. 2 zeigt eine Einzelheit aus dem oberen Bereich der Fig. 1;
Fig. 3 zeigt eine Einzelheit aus dem unteren Bereich der Fig. 1;
Fig. 4 zeigt eine vergrößerte Wiedergabe aus dem Bereich des Doppelbodens mit der zugehörigen Dampfführung;
Fig. 5 zeigt eine erneut vergrößerte Wiedergabe aus dem Bereich des Doppelrohrbodens;
Fig. 6 zeigt einen Schnitt nach der Linie VI-VI in Fig. 5;
Fig. 7 zeigt eine Ansicht auf einen feuerfesten Formkörper gemäß Fig. 5 von unten;
Fig. 8 zeigt eine vergrößerte Wiedergabe entsprechend Fig. 5 einer abgewandelten Ausführungsform des Wärmetauschers.

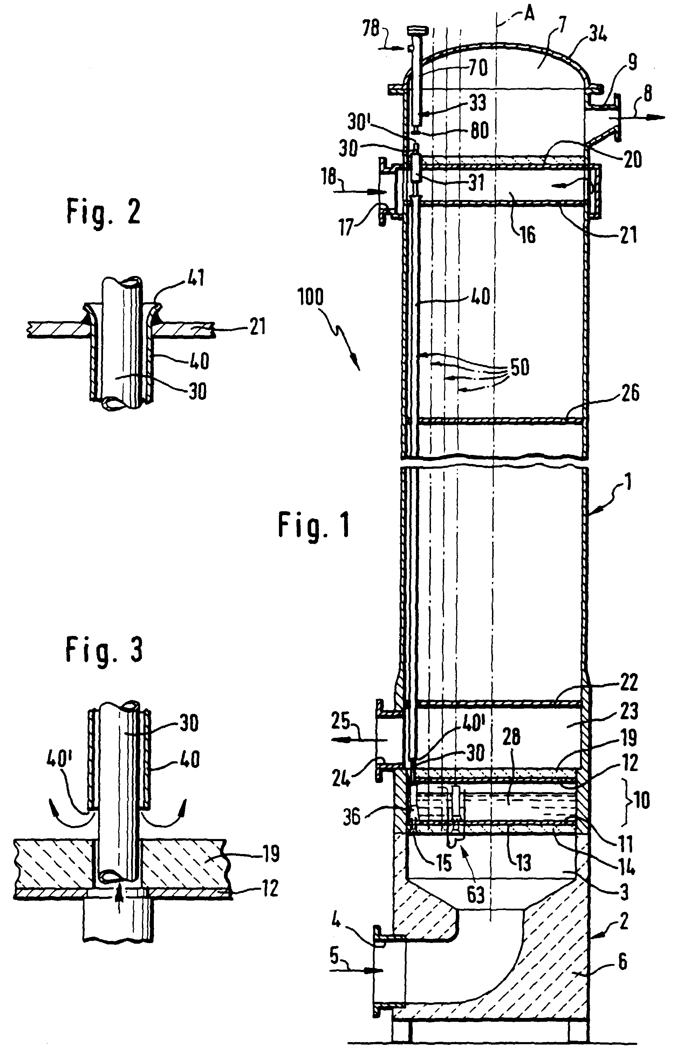

Der in Fig. 1 als Ganzes mit 100 bezeichnete Wärmetauscher umfaßt ein aufrechtes zylindrisches Gehäuse 1 aus Stahlblech, welches auf einem Unterbau 2 angeordnet ist und in welchem eine zylindrische, etwa den gleichen Durchmesser wie das Gehäuse 1 aufweisende, nach oben offene Prozeßgaseinlaßkammer 3 ausgebildet ist. Das beispielsweise etwa 1000°C heiße Prozeßgas tritt an dem Einlaß 4 im Sinne des Pfeiles 5 seitlich in den Unterbau 2 ein und wird in diesem nach oben in die Prozeßgaseinlaßkammer 3 umgeleitet. Der Unterbau 2 weist eine feuerfeste Ausmauerung 6 auf.

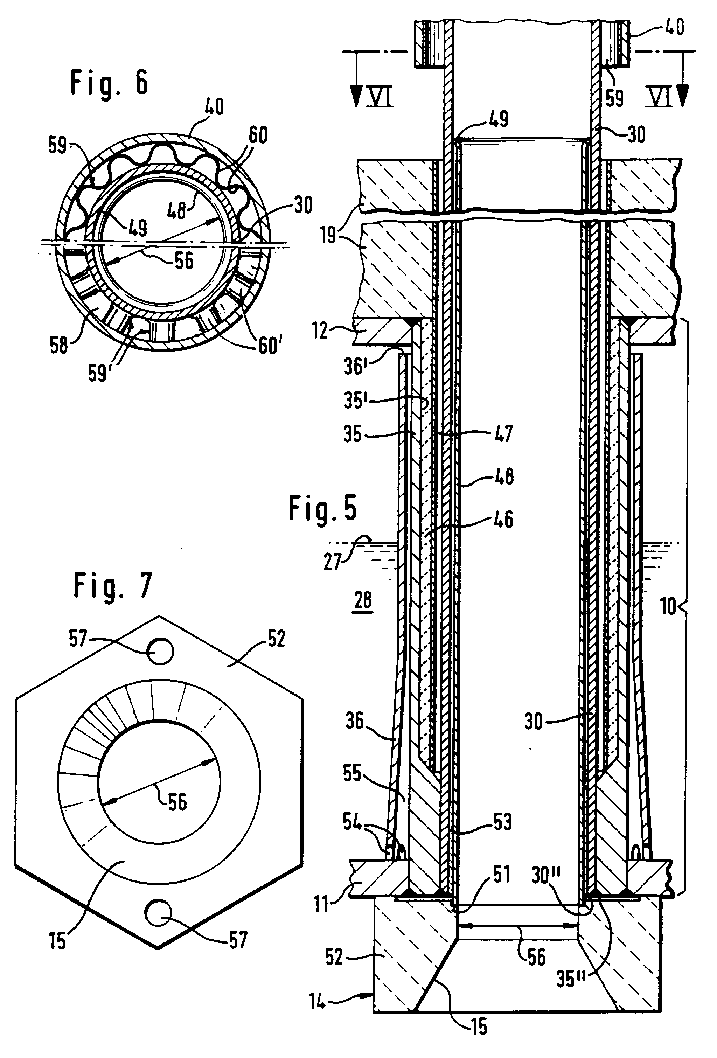

Am unteren Ende des Gehäuses 1 ist ein senkrecht zu dessen Achse A sich erstreckender Doppelrohrboden 10 ausgebildet, der aus einem horizontalen unteren Rohrboden 11 und einem darüber im Abstand von etwa 30 cm angeordneten horizontalen Rohrboden 12 besteht. Die untere, der Prozeßgaseinlaßkammer 3 zugewandte Seite 13 des Rohrbodens 11 ist mit einer keramischen Verkleidung 14 versehen, die konische Durchlässe 15 aufweist, wie im einzelnen anhand von Fig. 5 noch erläutert werden wird. In Fig. 1 ist nur ein derartiger Durchlaß angedeutet.

Nahe dem oberen Ende des Gehäuses 1 ist ein oberer Rohrboden 20 vorgesehen, der eine Prozeßgasauslaßkammer 7 von dem Innern des Gehäuses 1 abteilt. Das an dem Einlaß 4 eingeleitete Prozeßgas sammelt sich in der Prozeßgasauslaßkammer 7 und verläßt diese im Sinne des Pfeiles 8 an dem Auslaß 9 wieder.

Das Innere des Gehäuses ist von einem Rohrbündel 50 ausgefüllt. Das Rohrbündel 50 umfaßt dicht beieinanderstehend über den Querschnitt des Gehäuses 1 verteilte, zu der Achse A parallele Rohre 30, von denen in Fig. 1 nur eines wiedergegeben und einige weitere durch ihre Mittellinien angedeutet sind. Je nach der Auslegung des Wärmetauschers 100 handelt es sich um etwa 50 bis 100 zu dem Rohrbündel 50 zusammengefaßte Rohre 30.

Die Rohre 30 sind mit ihren unteren Enden in dem unteren Rohrboden 11 verschweißt und münden offen in jeweils einen ihnen zugeordneten konischen Durchlaß 15 der feuerfesten Verkleidung aus.

Die Rohre 30 erstrecken sich über die ganze Höhe des Gehäuses 1 und münden in der Prozeßgasauslaßkammer 7 oberhalb des Rohrbodens 20 offen aus. Die an dem Einlaß 4 eingeleiteten Prozeßgase treten am unteren Ende in die Rohre 30 ein und am oberen Ende aus den Rohren 30 in die Prozeßgasauslaßkammer 7 über. Da die Rohre 30 dabei wegen der hohen Temperatur der Prozeßgase sehr heiß werden und eine erhebliche Länge von z.B. 9 Meter aufweisen, kommt es zu erheblichen thermischen Dehnungen, weil das Gehäuse 1 die hohen Temperaturen nicht aufweist. An den in die Prozeßgasauslaßkammer 7 hineinragenden Enden der Rohre 30 ist mit Verlagerungsbeträgen in der Größenordnung von 30 bis 50 mm zu rechnen. Der Durchlaß an dem oberen Rohrboden muß vollkommen dicht sein, damit sich die Prozeßgase und die Kühlluft nicht vermischen und kein Brand entsteht. Aus diesem Grunde sind an der Unterseite des oberen Rohrbodens 20 Kompensatoren 31 mit Metallfaltenbälgen vorgesehen.

Im oberen Bereich des Gehäuses 1 ist durch einen mit einem Abstand von einigen 10 Zentimetern unter dem oberen Rohrboden 20 angeordneten Zwischenrohrboden 21 eine Kühllufteinlaßkammer 16 gebildet, die über einen seitlichen Einlaß 17 im Sinne des Pfeiles 18 mit Kühlluft versorgt werden kann, die eine normale oder nur leicht erhöhte Temperatur aufweist.

Jedes Rohr 30 ist von einem Mantel 40 in Gestalt eines weiteren Rohres umgeben, welches mit seinem Innenumfang ringsum Abstand zu dem Außenumfang des Rohres 30 beläßt. Die Mäntel 40 erstrecken sich über fast die gesamte Höhe des Gehäuses 1 und enden dicht oberhalb einer feuerfesten Zustellung 19 auf der Oberseite des zu dem Doppelrohrboden 10 gehörenden oberen Rohrbodens 12.

Durch einen mit Abstand oberhalb des Rohrbodens 12 angeordneten Zwischenrohrboden 22 ist eine als Ganzes mit 23 bezeichnete Kühlluftauslaßkammer abgeteilt, dessen Höhe im wesentlichen der Kühllufteinlaßkammer 16 entspricht, in die die Kühlluft aus den offenen unteren Enden der Mäntel 40 eintritt und aus der sie an einem Auslaß 24 im Sinne des Pfeiles 25 abgeführt werden kann. Die Mäntel sind an dem Zwischenrohrboden 21 festgelegt und hängen an diesem frei nach unten. Der Abstand des unteren Endes 40' gegenüber der feuerfesten Schicht 19 trägt der auftretenden Wärmedehnung Rechnung. Es muß stets ausreichend Platz für den Kühlluftaustritt vorhanden sein. Am oberen Ende sind die Mäntel 40 in der aus Fig. 2 ersichtlichen Weise bei 41 durch Ausbördeln trichterförmig erweitert, um den Eintritt der Kühlluft in den Zwischenraum zwischen dem Rohr 30 und dem Mantel 40 zu erleichtern.

Da die Rohre 30 und die Mäntel 40 eine erhebliche Höhe aufweisen, ist ein zusätzlicher Zwischenrohrboden 26 oder sind mehrere solcher Zwischenrohrböden über die Höhe verteilt vorgesehen, um das Rohrbündel 50 zu stabilisieren.

Die Rauchgasauslaßkammer 7 ist nach oben durch einen gekümpelten Deckel 34 abgeschlossen, der bei einem Ausführungsbeispiel gleichzeitig Träger für Dampf reinigungsvorrichtungen 33 ist, mittels deren in zeitlichen Abständen von z.B. einer Minute ein Dampfstoß von oben in die Rohre 30 hineingeschickt werden kann, um an deren Innenwandung sich festzusetzen beginnende Ablagerungen von feindispersen Feststoffen wie Ruß zu lösen und durch das Rohr 30 nach unten auszutreiben.

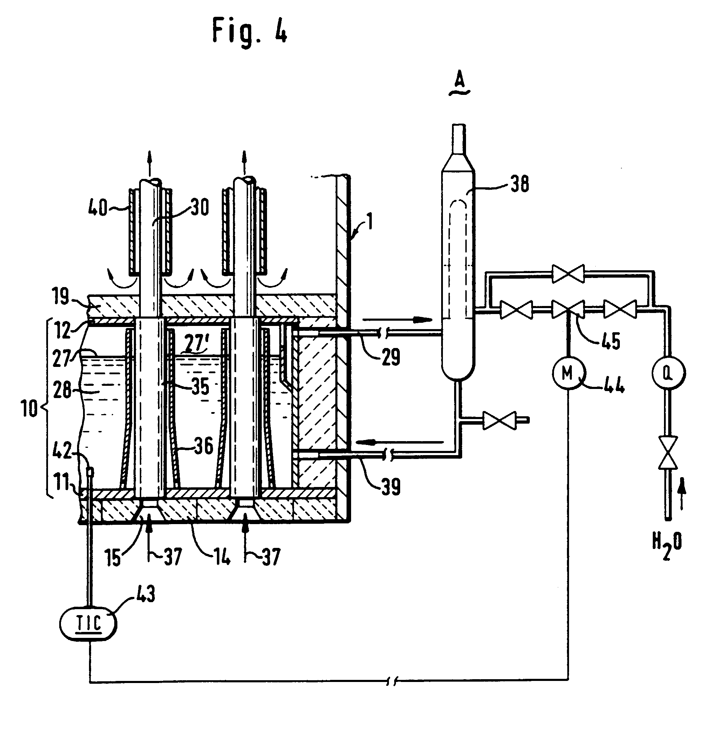

In Fig. 4 sind der Doppelrohrboden 10 etwas mehr im Detail und die in Fig. 1 weggelassene Steuerung der Siedewasserkühlung wiedergegeben. Der Zwischenraum zwischen den Rohrböden 11 und 12 ist bis zu einer Füllstandshöhe 27 mit Wasser 28 gefüllt. Die Rohre 30 sind über die Höhe des Doppelrohrbodens 10 von Trennrohren 35 umgeben, die mit den Rohrböden 11,12 dicht verschweißt sind. Die Rohre 30 werden durch die Trennrohre 35 einfach hindurchgesteckt und kommen nicht direkt mit dem Kühlwasser 28 in Berührung.

Die Trennrohre 35 wiederum sind mit geringem radialen Abstand von einer oben zylindrischen und unten sich konisch leicht erweiternden Tülle 36 umgeben, die zur Herbeiführung einer Siedewasserkühlung des unteren Endes des Trennrohres 35 bzw. des Rohres 30 dient, wie im einzelnen noch aus Fig. 5 hervorgeht.

Die heißen Rauchgase treten von unten im Sinne der Pfeile 37 in die Rohre 30 ein, die sich daher an ihrem unteren Ende stark aufheizen. Das Wasser 28 beginnt zu sieden. Der entstehende Dampf wird über die Leitung 29 aus dem Dampfraum über dem Wasserspiegel 27 abgezogen und einem wassergekühlten Kondensator 38 zugeführt, worin er kondensiert, worauf das Kondensat über die Leitung 39 wieder in den Doppelrohrboden 10 zurückgeführt wird.

Die Temperatur in dem Doppelrohrboden 10 ist vom herrschenden Druck abhängig. Sie wird durch ein Thermoelement 42 gemessen und gegen einen Wandler 43 in ein elektrisches Signal umgewandelt, mittels welchem ein Motor 44 zur gesteuerten Verstellung eines Ventils 45 betrieben werden kann. Das Ventil 45 bestimmt die Menge des aus dem H₂O-Netz im Sinne des Pfeiles dem Kondensator 38 zugeführten Kühlwassers und damit die Kühlleistung des Kondensators 38 im Verhältnis zur Heizleistung der Rauchgase in dem Doppelrohrboden 10. Das Kühlwasser in dem Kondensator 38 verdunstet oder verdampft und geht in die Atmosphäre A ab oder wird als Warmwasser genutzt. Je mehr Kühlwasser zugeführt wird, desto größer ist die Kondensationsleistung. Der Druck in dem Doppelrohrboden 10 sinkt ab. Dem wirkt der Wärmeeintrag durch die Prozeßgase entgegen. Es ergeben sich ein Gleichgewicht bzw. eine gewünschte Temperatur des Wassers und des Dampfes in dem Doppelrohrboden 10, die durch entsprechende Betätigung des Ventils 45 eingestellt werden. Meist wird in dem Doppelrohrboden 10 ein ein Druck von 15 bis 20 Bar aufrechterhalten, was Temperaturen um 180 bis 200°C entspricht, die zur Verhinderung von Korrosion durch kondensierende Bestandteile der Prozeßgase günstig sind.

In Fig. 5 ist erkennbar, daß das das jeweilige Rohr 30 umgebende Trennrohr 35 in die beiden Rohrböden 11,12 des Doppelrohrbodens 10 dicht eingeschweißt ist. In den oberen Dreivierteln der Höhe des Trennrohrs 35 weist dieses einen vergrößerten Innendurchmesser auf, so daß zwischen dem Außenumfang des Rohres 30 und dem dortigen Innenumfang 35' des Trennrohres 30 feuerfestes Isoliermaterial 46 untergebracht werden kann, welches nach innen durch ein dünnwandiges Rohr 47 abgedeckt ist, so daß das Rohr 30 von oben problemlos eingesteckt werden kann. Am unteren Ende 30" ist das Rohr 30 an der inneren unteren Kante des Trennrohrs 35 bei 35" dicht angeschweißt. Im Innern des Rohres 30 ist über die Höhe des Doppelrohrbodens 10 eine innere Schutzhülse 48 aus dünnwandigem Rohrmaterial angeordnet, die mit ihrem Außenumfang einen geringen Abstand zum Innenumfang des Rohrs 30 beläßt und oberhalb der feuerfesten Verkleidung 19 einen nach außen gerichteten Bördelrand 49 zur Führung aufweist. Am unteren Ende sitzt die Schutzhülse 48 auf einem Absatz 51 der feuerfesten Formkörper 52 auf, die die feuerfeste Verkleidung 14 bilden. Im Bereich des unteren Endes ist zwischen dem Außenumfang der Schutzhülse 48 und dem Innenumfang des Rohres 30 ein feuerfestes Isoliermaterial 53 angeordnet.

Das außen glattzylindrische Trennrohr 35 ist zur Erzielung einer Siedewasserkühlung von einer Tülle 36 umgeben, die etwa in der oberen Hälfte zylindrisch ausgebildet ist und den Außenumfang des Trennrohrs 35 mit einem geringen Spiel von etwa 2 bis 6 mm, in dem Beispiel etwa 4 mm, umgibt. Im unteren Bereich erweitert sich die Tülle 36 leicht konisch. Sie steht auf dem Rohrboden 11 auf und hat am unteren Rand Durchbrechungen 54, die den Eintritt von Wasser 28 in den Raum 55 zwischen dem Außenumfang des Trennrohrs 35 und den Innenumfang der Tülle 36 ermöglichen. Am oberen Rand 36' beläßt die Tülle 36 Abstand in der Größenordnung von 1 cm von der Unterseite des Rohrbodens 12. Das an den Durchlässen 54 eintretende Wasser verdampft an der heißen Außenseite des Trennrohrs 35, wobei der Dampf bzw. gegebenenfalls ein Dampfwassergemisch in dem Zwischenraum zwischen dem Innenumfang der Tülle 36 und dem Außenumfang des Trennrohrs 35 nach oben schießt, den Außenumfang des Trennrohrs 35 im wesentlichen auf der Dampf- bzw. Wassertemperatur hält, und insbesondere den Bereich der Schweißstelle zwischen dem oberen Rand des Trennrohrs 35 und dem Rohrboden 12 gezielt kühlt.

Die feuerfeste Verkleidung 14, gegen die die aus der Prozeßgaseinlaßkammer 3 heranströmenden heißen Prozeßgase auftreffen, besteht in dem Ausführungsbeispiel aus im Umriß gleichmäßig sechseckigen Formkörpern 52, von denen jedem Rohr 30 einer zugeordnet ist. Die Formkörper 52 decken die Unterseite des Rohrbodens 11 geschlossen ab. Sie weisen einen sich konisch verengenden Durchlaß 15 auf, der sich bis auf den Innendurchmesser 56 der Schutzhülse 48 verjüngt. Der feuerfeste Formkörper weist Lochungen 57 auf, durch die an der Unterseite des Rohrbodens 11 angeschweißte Stifte oder Haken hindurchgreifen. Die Formkörper 52 sind also unter dem Rohrboden 11 aufgehängt.

In Fig. 6 ist erkennbar, daß der Mantel 40 mit seinem Innenumfang einen ausreichenden Abstand vom Außenumfang des Rohres 30 beläßt, so daß in dem Zwischenraum 58 ein ausreichender Strömungsquerschnitt für die aus der Kühllufteinlaßkammer 16 eintretende Kühlluft gegeben ist. In dem Zwischenraum 58 sind zusätzliche Wärmeübertragungsflächen 60,60' vorgesehen. In der oberen Hälfte der Fig. 6 sind die Wärmeübertragungsflächen 60 durch die Oberfläche eines in einer zu der Achse der Rohre 30,40 senkrechten Ebene gewellten Bleches 59 gegeben, welches mit dem Außenumfang des Rohres 30 in wärmeleitendem Kontakt steht. Bei dem Beispiel in der unteren Hälfte der Fig. 6 sind die Wärmeübertragungsflächen 60' die Oberflächen von über den Außenumfang des Rohres 30 verteilten und mit ihm wärmeleitend verbundenen Zapfen 59', Stege oder Rippen, die von dem Kühlmedium umströmt werden und einen entsprechenden Strömungsweg zwischen sich freilassen. Durch die zusätzlichen Wärmeübertragungsflächen 60,60' kann der Wärmeübergang von dem Außenumfang des Rohres 30 auf die durch den Zwischenraum 58 strömende Kühlmedium, im allgemeinen Kühlluft, deutlich vergrößert werden.

In einem konkreten Ausführungsbeispiel beträgt der Außendurchmesser des Rohres 30 etwa 90 mm, der Innnendurchmesser des Rohres 40 etwa 115 mm. Die Rohre 30,40, die Bleche und Zapfen 59,59' sowie die Komponenten des Doppelrohrbodens 10 bestehen aus geeigneten temperaturbeständigen Stählen.

Jedem Rohr 30 ist an einem seiner Enden eine Dampfreinigungsvorrichtung zugeordnet, die von Zeit zu Zeit einen Dampfstoß in das Rohr abgibt, um an seinem Innenumfang sich bildende Ablagerungen zu beseitigen.

In Fig. 1 ist auf der linken Seite des Gehäuses 1 ein Ausführungsbeispiel angedeutet, bei dem, wie bereits erwähnt, eine Dampfreinigungsvorrichtung 33 oberhalb des oberen Endes 30' eines Rohres 30 angeordnet ist. Die Dampfreinigungsvorrichtung 33 umfaßt ein zylindrisches Gehäuse 70, welches zur Achse des zugehörigen Rohres 30 koaxial und in den Deckel 34 eingeschweißt ist. Am unteren Ende ist ein durch eine gelochte Scheibe gebildeter Dichtungsteller 80 angebracht, der bei einem Dampfdruck an dem Einlaß 78 vorgeschoben wird und sich auf das obere Endes 30' des Rohres 30 setzt und durch den ein Dampfstoß nach unten in das Innere des Rohres 30 gerichtet werden kann.

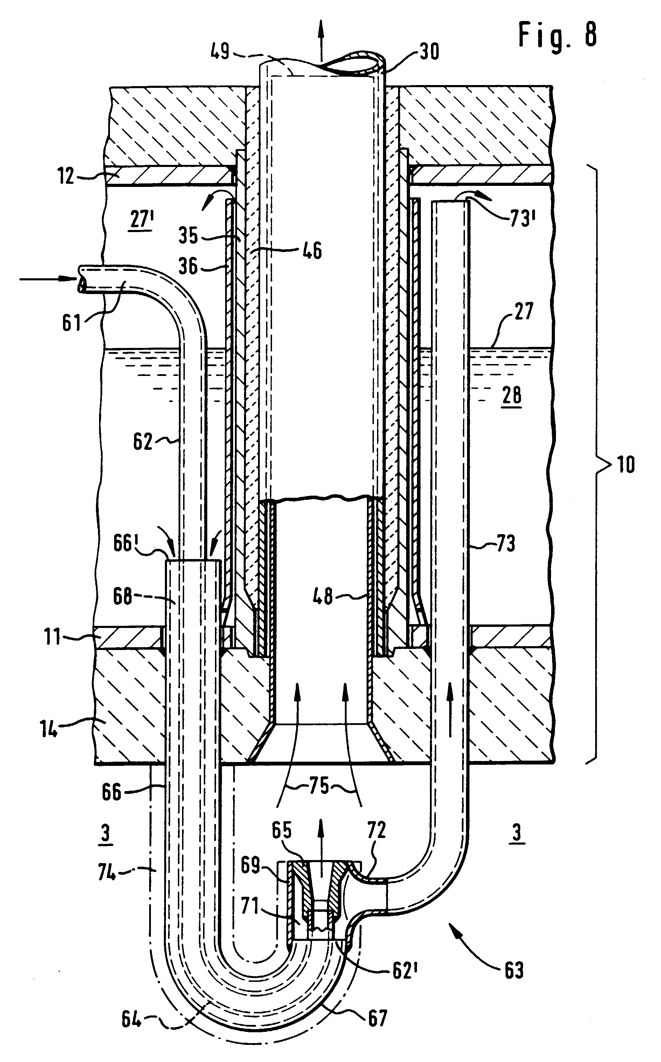

Eine alternative Ausführungsform einer von unten blasenden Dampfreinigungsvorrichtung 63 ist in Fig. 1 im Bereich des Doppelrohrbodens 10 angedeutet und in Fig. 8 mehr im Einzelnen dargestellt. Soweit die Teile denen der Fig. 5 entsprechen, sind die Bezugszahlen gleich.

Die Dampfzuleitung 61 wird durch den oberhalb des Wasserspiegels 27 belassenen Dampfraum 27' bis nahe an das jeweilige Rohr 30 herangeführt und biegt dort in einen nach unten weisenden Schenkel 62 um, der nach unten durch den Rohrboden 11 und die feuerfeste Verkleidung 14 hindurch in die Prozeßgaseinlaßkammer 3 führt, in der sich ein 180°-Rohrbogen 64 anschließt, an dessen freiem nach oben in das Rohr 30 weisenden Schenkel 62' eine Dampfdüse 65 konzentrisch zu dem Rohr 30 angebracht ist.

Die Dampfzuleitung 61 ist in ihrem letzten, der Dampfdüse 65 benachbarten Bereich konzentrisch von einem Mantelrohr 66 umgeben, welches ebenfalls aus dem Doppelrohrboden 10 in die Prozeßgaseinlaßkammer 3 führt und dort einen 180°-Rohrbogen 67 bildet. Das Mantelrohr 66 beläßt zu dem Außenumfang der Dampfzuleitung 61 einen Zwischenraum 68. Das den Schenkel 62 umgebende Ende 66' des Mantelrohrs 66 liegt mit Abstand oberhalb des Rohrbodens 11 und mit Abstand unterhalb des Wasserspiegels 27. Es kann also Wasser 28 im Sinne der Pfeile an dem oberen Ende 66' in den Zwischenraum 68 eintreten und diesen ausfüllen. Die Lage des oberen Endes 66' mit Abstand oberhalb des Rohrbodens 11 ergibt eine Funktion als Überlauf, die verhindert, daß bei einem Leitungsbruch im Bereich der Prozeßgaseinlaßkammer 3 der Doppelboden 10 vollständig leer laufen kann.

Die Dampfdüse 65 ist ebenfalls von einem Mantel 69 umgeben, dessen Inneres 71 mit dem Zwischenraum 68 in Verbindung steht und einen seitlichen Anschluß 72 aufweist, an den sich ein nach oben umgebogenes, dicht neben dem Rohr 30 bzw. der Tülle 36 in den Doppelrohrboden 10 eintretendes Steigrohr 73 anschließt. Das offen ausmündende obere Ende 73' des Steigrohrs 73 liegt oberhalb des Wasserspiegels 27 und kurz vor dem oberen Rohrboden 12.

Der in der Prozeßgaseinlaßkammer 3 im Bereich der hohen Temperaturen verlaufende Abschnitt des Mantelrohrs 66 kann von einer Isolierung 74 umgeben sein. Dies gilt natürlich auch für den entsprechenden Abschnitt des Steigrohrs 73.

In die Dampfzuleitung 61 wird von Zeit zu Zeit im Sinne des Pfeiles stoßartig Dampf eingeleitet, der von unten in das Rohr 30 eintritt und in diesem am Innenumfang anhaftende Ablagerungen löst.

Wasser aus dem Doppelrohrboden 10 tritt am oberen Ende 66' des Mantelrohrs 66 im Sinne der Pfeile in den Zwischenraum 68 ein und wird im Bereich der Prozeßgaseinlaßkammer 3 sofort verdampft. Da der Strömungswiderstand für den Dampf im Bereich des Steigrohrs 73 geringer ist als im Bereich des Zwischenraums 68, tritt der gebildete Dampf im Sinne des Pfeiles 75 in den Dampfraum 27' und gegen den oberen Rohrboden 12 und nicht durch den Zwischenraum 68 in das Wasser 28 aus. Dadurch ergibt sich eine Transportwirkung, die zur Folge hat, daß immer neues kühlendes Heißwasser 28 durch den Zwischenraum 68 hindurch und in Dampfform in dem Dampfraum 27' transportiert wird, so daß die Rohranordnung 62,64;66,67 auf einer ertragbaren Temperatur gehalten wird. Um den Effekt zu unterstützen, sollte dafür gesorgt werden, daß der Querschnitt des Steigrohrs 73 größer als der Querschnitt des ringförmigen Zwischenraums 68 ist.

Um das Einströmen der Prozeßgase in das Rohr 30 im Sinne der Pfeile 75 möglichst wenig zu behindern, ist die Dampfdüse 65 in einem Abstand von dem unteren Ende des Rohres 30 bzw. des unteren Endes der Schutzhülse 48 bzw. der Verkleidung 14 angeordnet und hat auch einen den Innenquerschnitt der Schutzhülse 48 untertreffenden Außenquerschnitt.

## Patentansprüche

1. Wärmetauscher zur Abkühlung von Prozeßgasen mit feindispersen Feststoffanteilen bei hohen Temperaturen, vorzugsweise zwischen 800 und 1200°, insbesondere zur Rußherstellung,
mit einem Gehäuse (1),
mit einem in dem Gehäuse (1) angeordneten Bündel (50) einander paralleler, dicht beieinander verlaufender Rohre (30) zum Hindurchleiten der Prozeßgase,
mit in dem Gehäuse (1) nahe den Enden der Rohre (30) quer zu diesen angeordneten, den Querschnitt des Gehäuses (1) ausfüllenden Rohrböden, durch die die Rohre (30) dicht hindurchgeführt sind und axial außerhalb deren die Rohre (30) offen enden,
mit einer in dem Gehäuse (1) an einem Ende axial außerhalb des dortigen Rohrbodens ausgebildeten Prozeßgaseinlaßkammer (3),
mit einer in dem Gehäuse (1) am anderen Ende axial außerhalb des dortigen Rohrbodens (20) ausgebildeten Prozeßgasauslaßkammer (7),
und mit einem in dem Gehäuse (1) nahe dem einen Rohrboden (20) auf dessen dem anderen Rohrboden (10) zugewandter Seite angeordneten Einlaß (17) für ein fluides Kühlmedium und einem nahe dem anderen Rohrboden (10) auf dessen dem ersten Rohrboden (20) zugewandter Seite angeordneten Auslaß (24) für das fluide Kühlmedium,
wobei der auf der Seite der Prozeßgaseinlaßkammer (3) gelegene Rohrboden als Doppelrohrboden (10) ausgeführt ist, durch den die Enden der Rohre (30) hindurchführen und in welchem ein Kühlmedium vorhanden ist,
**dadurch gekennzeichnet**,
daß in dem Doppelrohrboden (10) eine Siedewasserkühlung dadurch verwirklicht ist, daß der Doppelrohrboden (10) horizontal angeordnet und partiell mit Wasser gefüllt ist, wobei der Dampfraum mit einem externen Kondensator (38) verbunden und das Kondensat in den Doppelrohrboden (10) zurückführbar ist.

2. Wärmetauscher nach Anspruch 1, **dadurch gekennzeichnet**, daß der Kondensator (38) wassergekühlt ist und zur Steuerung der Menge des dem Kondensator zugeführten Kühlwassers ein die Temperatur des Wassers in dem Doppelrohrboden (10) messendes Thermoelement (42) vorgesehen ist.

3. Wärmetauscher nach Anspruch 1 oder 2, **dadurch gekennzeichnet**, daß die Rohre (30) im Bereich des Doppelrohrbodens (10) eine lose eingesetzte innere Schutzhülle (48) aufweisen.

4. Wärmetauscher nach einem der Ansprüche 1 bis 3, **dadurch gekennzeichnet**, daß jedes der Rohre (30) im Bereich des Doppelrohrbodens (10) von einem zumindest auf einen Teil der Erstreckung des Doppelrohrbodens (10) in Rohrrichtung mit allseitigem Abstand von einem Trennrohr (35) umgeben ist, welches mit den Rohrböden (11,12) des Doppelrohrbodens (10) dicht verbunden ist.

5. Wärmetauscher nach Anspruch 4, **dadurch gekennzeichnet**, daß der Abstandsraum zwischen dem Innenumfang (35') des Trennrohrs (35) und dem Außenumfang des Rohrs (30) zumindest teilweise mit feuerfestem Isoliermaterial (46) ausgefüllt ist.

6. Wärmetauscher nach einem der Ansprüche 4 bis 5, **dadurch gekennzeichnet**, daß die Trennrohre (35) aufrecht stehen und im Bereich des Doppelrohrbodens (10) von einer Tülle (36) konzentrisch umgeben sind, die zumindest im oberen Bereich einen geringen radialen Abstand zum Außenumfang des Trennrohrs (35) beläßt, daß am unteren Rand der Tülle (36) Durchlaß (54) zum Zwischenraum (55) zwischen Tülle (36) und Trennrohr (35) und am oberen Rand (36') der Tülle (36) Durchlaß aus dem Zwischenraum (55) in den Dampfraum des Doppelrohrbodens (10) besteht.

7. Wärmetauscher nach einem der Ansprüche 1 bis 6,
**dadurch gekennzeichnet**,
daß unterhalb des die Prozeßauslaßkammer (7) begrenzenden Rohrbodens (20) ein Zwischenrohrboden (21) zur Bildung einer ersten Kammer mit einem Kühlmediumanschluß und oberhalb des Rohrbodens (12) ein Zwischenrohrboden (22) zur Bildung einer zweiten Kammer mit einem Kühlmediumanschluß angeordnet sind,
daß jedes Rohr (30) in dem Bereich zwischen den Rohrböden (10,20) von einem rohrförmigen Mantel (40) umgeben ist,
und daß die Mäntel (40) an einem Ende in der ersten Kammer mit Abstand von dem Rohrboden (20) und an dem anderen Ende in der zweiten Kammer mit Abstand von dem Rohrboden (12) offen enden, so daß von beiden Kammern Zugang zu den Zwischenräumen (58) zwischen den Rohren (30) und ihren Mänteln (40) besteht und das fluide Kühlmedium von einer Kammer zur anderen durch den Zwischenraum (58) zwischen Außenumfang des Rohrs (30) und Innenumfang des Mantels (40) hindurchleitbar ist.

8. Wärmetauscher nach Anspruch 7, **dadurch gekennzeichnet**, daß die erste Kammer die Kühlmediumeinlaßkammer (16) mit dem Einlaß (17) und die zweite Kammer die Kühlmediumauslaßkammer (23) mit dem Auslaß (24) bilden.

9. Wärmetauscher nach Anspruch 8, **dadurch gekennzeichnet**, daß die Mäntel (40) an ihren außerhalb des Zwischenrohrbodens (21) in der Kühlmediumeinlaßkammer (16) gelegenen Enden dicht außerhalb des Zwischenrohrbodens (21) trichterartig ausgebördelt sind.

10. Wärmetauscher nach einem der Ansprüche 7 bis 9, **dadurch gekennzeichnet**, daß in dem Zwischenraum (58) zwischen Außenumfang des Rohres (30) und Innenumfang des Mantels (40) mit dem Außenumfang des Rohrs (30) in Wärmeleitungskontakt stehende zusätzliche Wärmeübertragungsflächen (60,60') vorgesehen sind.

11. Wärmetauscher nach Anspruch 10, **dadurch gekennzeichnet**, daß die zusätzlichen Wärmeübertragungsflächen (60) durch ein in einer zur Rohrachse senkrechten Ebene gewelltes, mit den in Richtung der Rohrachse verlaufenden Wellenscheiteln am Außenumfang des Rohrs (30) anliegendes rohrförmiges Blechgebilde (59) gegeben sind.

12. Wärmetauscher nach Anspruch 10, **dadurch gekennzeichnet**, daß die zusätzlichen Wärmeübertragungsflächen (60') durch über den Außenumfang des Rohrs (30) verteilte Zapfen (59'), Stege oder Rippen gebildet sind, die mit dem Rohr (30) wärmeleitend verbunden sind und einen Strömungsweg für das Kühlmedium durch den Zwischenraum (58) freilassen.

13. Wärmetauscher nach einem der Ansprüche 1 bis 12, **dadurch gekennzeichnet**, daß die Rohre (30) mit dem Doppelrohrboden (10) fest und dicht verbunden sind und an dem die Prozeßgasauslaßkammer (7) begrenzenden Rohrboden (20) für jedes Rohr (30) ein dessen Wärmedehnung aufnehmender Kompensator (31) vorgesehen ist.

14. Wärmetauscher nach einem der Ansprüche 1 bis 13, **dadurch gekennzeichnet**, daß jedem Rohr (30) an einem Ende eine Dampfreinigungsvorrichtung zugeordnet ist, die zwecks Reinigung der Rohrinnenseite von abgesetztem Material in wählbaren Abständen einen Dampfstoß in das Rohr (30) abgibt.

15. Wärmetauscher nach Anspruch 14, **dadurch gekennzeichnet**, daß die Dampfreinigungsvorrichtung (33) an dem in die Prozeßgasauslaßkammer (7) hineinragenden Ende (30') jedes Rohrs (30) angeordnet ist.

16. Wärmetauscher nach Anspruch 14, **dadurch gekennzeichnet**, daß die Dampfreinigungsvorrichtung (63) an dem in die Prozeßgaseinlaßkammer (3) mündenden Ende jedes Rohrs (30) angeordnet ist.

17. Wärmetauscher nach Anspruch 16, **dadurch gekennzeichnet**, daß vor der Mündung jedes Rohrs (30) in der Prozeßgaseinlaßkammer (30) eine zur Rohrachse konzentrische, in das Rohr (30) gerichtete, die Strömung der Prozeßgase in das Rohr (30) hinein wenig behindernde Dampfdüse (65) angeordnet ist, deren Dampfzuleitung (61) in dem der Dampfdüse (65) benachbarten Abschnitt durch die Prozeßgaseinlaßkammer (3) herangeführt ist.

18. Wärmetauscher nach Anspruch 17, **dadurch gekennzeichnet**, daß die Dampfzuleitung (61) in dem Doppelrohrboden (10) bis nahe an das betreffende Rohr (30) herangeführt ist, dort durch den der Prozeßeinlaßkammer (3) benachbarten Rohrboden (11) nach unten hindurch in die Prozeßgaseinlaßkammer (3) hineingeführt ist, dort gegen den Rohrboden (11) zurückgebogen ist und an ihrem freien Ende die Dampfdüse (65) trägt.

19. Wärmetauscher nach Anspruch 18, **dadurch gekennzeichnet**, daß die Dampfzuleitung (61) in der Prozeßgaseinlaßkammer (3) einen 180°-Rohrbogen (64) bildet, dessen Schenkel (62,62') parallel zur Rohrachse sind,

20. Wärmetauscher nach Anspruch 18 oder 19, **dadurch gekennzeichnet**, daß die Dampfdüse (65) und die Dampfzuleitung (61) in dem der Dampfdüse (65) benachbarten Abschnitt mit radialem Abstand konzentrisch von einem Mantelrohr (66) umgeben sind, welches innerhalb des Doppelrohrbodens (10) unterhalb des Wasserspiegels (27) endet, so daß dort Wasser in den Zwischenraum (68) zwischen der Dampfzuleitung (61) und dem Mantelrohr (66) eintreten kann, daß an der Dampfdüse (65) der Zwischenraum (68) zwischen der Dampfzuleitung (61) und dem Mantelrohr (66) bis auf einen Auslaß (72) geschlossen ist, daß an dem Auslaß (72) ein Steigrohr (73) angeschlossen ist, welches durch den Rohrboden (11) in den Doppelrohrboden (10) zurückgeführt ist und in geringem Abstand von dem Rohrboden (12) oberhalb des Wasserspiegels (27) offen endet, und daß der Strömungswiderstand für im Bereich der Prozeßgaseinlaßkammer sich in dem Zwischenraum (68) bildenden Dampf durch das Steigrohr (73) hindurch kleiner ist als durch den Zwischenraum (68).

21. Wärmetauscher nach Anspruch 20, **dadurch gekennzeichnet**, daß das Mantelrohr (66,67) im Bereich der Prozeßgaseinlaßkammer (3) von einer Isolierung (74) umgeben ist.

22. Wärmetauscher nach Anspruch 20 oder 21, **dadurch gekennzeichnet**, daß das Mantelrohr (66) über den Rohrboden (11) zur Bildung eines Überlaufs für das in dem Doppelrohrboden (10) befindliche Wasser (28) übersteht.

23. Wärmetauscher nach einem der Ansprüche 20 bis 22, **dadurch gekennzeichnet**, daß der Querschnitt des Steigrohrs (73) größer ist als der Querschnitt des Zwischenraums (68) zwischen Dampfzuleitung (61) und Mantelrohr (66).

24. Wärmetauscher nach einem der Ansprüche 1 bis 23, **dadurch gekennzeichnet**, daß die der Prozeßgaseinlaßkammer (3) zugewandte Unterseite (13) des zu dem Doppelrohrboden (10) gehörenden Rohrbodens (11) eine Durchlässe (15) zu den einzelnen Rohren (10) freilassende feuerfeste Verkleidung (14) aufweist.

25. Wärmetauscher nach Anspruch 24, **dadurch gekennzeichnet,** daß die Verkleidung (14) aus regelmäßig geformten, zusammen die gesamte Unterseite (13) des Rohrbodens (11) lückenlos abdeckenden feuerfesten Formkörpern (52) besteht.

## Claims

1. Heat exchanger for cooling process gases having finely dispersed solid particles at high temperatures, preferably between 800 and 1200°, in particular for producing carbon black,
with a housing (1),
with a bundle (50), arranged within the housing (1), of mutually parallel closely packed tubes (30) for carrying the process gases,
with tube plates near the ends of the tubes (30), extending transversely with respect to them and filling the cross-section of the housing (1), through which the tubes (30) pass in a sealing manner and axially outside which the open ends of the tubes (30) terminate,
with a process gas entry chamber (3) formed in the housing (1) at one end axially outside the tube plate at that end,
with a process gas outlet chamber (7) formed in the housing (1) at the other end axially outside the tube plate (20) at that end,
and with an entry (17) for a fluid cooling medium arranged in the housing (1) near the one tube plate (20) at that side of it which faces towards the other tube plate (10) and an outlet (24) for the fluid cooling medium arranged near the other tube plate (10) on that side of it which faces towards the first tube plate (20),
the tube plate which is at the end having the process gas entry chamber (3) being in the form of a double-walled tube plate (10) through which the ends of the tubes (30) pass and in which a cooling medium is present,
characterised in that
a boiling water cooling action is produced in the double-walled tube plate (10) in that the double-walled tube plate (10) is arranged horizontally and partially filled with water, the steam space being connected to an external condenser (38) and the condensate being fed back into the double-walled tube plate (10).

2. Heat exchanger according to claim 1, characterised in that the condenser (38) is water-cooled and for controlling the quantity of the cooling water fed to the condenser a thermo element (42 ) is provided, measuring the temperature of the water in the double-walled tube plate (10).

3. Heat exchanger according to claim 1 or 2, characterised in that the tubes (30) have a loosely inserted inner protective sleeve (48) in the region of the double-walled tube plate (10).

4. Heat exchanger according to one of claims 1 to 3, characterised in that each of the tubes (30) is enclosed in the region of the double-walled tube plate (10), at least over a part of the extent of the double-walled tube plate (10), in the direction of the tube by a separating tube (35) spaced away from it all round and tightly connected to the walls (11, 12) of the double-walled tube plate (10).

5. Heat exchanger according to claim 4, characterised in that the spacing between the inner surface (35') of the separating tube (35) and the outer surface of the tube (30) is at least partially filled with refractory insulating material (46).

6. Heat exchanger according to one of claims 4 to 5, characterised in that the separating tubes (35) stand upright and are concentrically surrounded in the region of the double-walled tube plate (10) by a sleeve (36) which leaves at least in the upper region a minimum radial spacing from the outside surface of the separating tube (35), that access (54) exists at the lower edge of the sleeve (36) to the space (55) between sleeve (36) and separating tube (35) and access exists at the upper edge (36') of the sleeve (36) from the space (55) into the steam chamber of the double-walled tube plate (10).

7. Heat exchanger according to one of claims 1 to 6,
**characterised in that**,
underneath the tube plate (20) which forms a boundary of the process gas outlet chamber (7) there is arranged an intermediate tube plate (21) for forming a first chamber with a cooling medium connection and above the tube plate (12) there is arranged an intermediate tube plate (22) for forming a second chamber with a cooling medium connection,
that each tube (30) is surrounded by a tubular casing (40) in the region between the tube plates (10, 20),
and that the casings (40) terminate in an open manner at one end in the first chamber spaced from the tube plate (20) and at the other end in the second chamber spaced from the tube plate (12), so that from both chambers access exists to the spaces (58) between the tubes (30) and their casings (40) and that fluid cooling medium can be conducted from one chamber to the other through the space (58) between the outer surface of the tube (30) and the inside of the casing (40).

8. Heat exchanger according to claim 7, characterised in that the first chamber forms the cooling medium inlet chamber (16) with the inlet (17) and the second chamber forms the cooling medium outlet chamber (23) with the outlet (24).

9. Heat Heat exchanger according to claim 8, characterised in that the casings (40) are flanged outwards in a funnel-like manner at their ends lying outside the intermediate tube plate (21) in the cooling medium inlet chamber (16) immediately outside the intermediate tube plate (21).

10. Heat exchanger according to one of claims 7 to 9, characterised in that additional heat transfer surfaces (60, 60') are provided in the space (58) between the outside of the tube (30) and inside of the casing (40), in thermally conducting contact with the outside of the tube (30).

11. Heat exchanger according to claim 10, characterised in that the additional heat transfer surfaces (60) are provided by a tubular sheet metal body (59), corrugated in a plane perpendicular to the axis of the tube, with apices of the waves extending in the direction of the axis of the tube and engaging against the outer surface of the tube (30).

12. Heat exchanger according to claim 10, characterised in that the additional heat transfer surfaces (60') are formed by pins (59'), webs or ribs distributed around the outside of the tube (30), in thermally conducting contact with the tube (30) and leaving a flow path for the cooling medium free through the space (58).

13. Heat exchanger according to one of claims 1 to 12, characterised in that the tubes (30) are rigidly and sealingly connected to the double-walled tube plate (10) and a compensator (31) is provided for each tube (30), allowing for its thermal expansion, at the tube plate (20) which forms a boundary of the process gas outlet chamber (7).

14. Heat exchanger according to one of claims 1 to 13, characterised in that each tube (30) has associated with it at one end a steam cleaning device which delivers a burst of steam into the tube (30) at selected intervals for cleaning deposited material from the inside of the tube.

15. Heat exchanger according to claim 14, characterised in that the steam cleaning device (33) is arranged at that end (30') of each tube (30) which projects into the process gas outlet chamber (7).

16. Heat exchanger according to claim 14, characterised in that the steam cleaning device (63) is arranged at that end of each tube (30) which opens into the process gas entry chamber (3).

17. Heat exchanger according to claim 16, characterised in that there is arranged in front of the mouth of each tube (30) in the process gas entry chamber (30) a steam nozzle (65) concentric with the axis of the tube, directed into the tube (30) giving little interference with the flow of process gas into the tube (30), and of which the steam supply (61) into the portion adjacent to the nozzle (65) is conducted through the process gas entry chamber (3).

18. Heat exchanger according to claim 17, characterised in that the steam supply pipe (61) is extended in the double-walled tube plate (10) as far as close to the associated tube (30) and there it is led downwards through the tube plate (11) adjacent to the process inlet chamber (3) and into the process gas inlet chamber (3), is bent back at that point towards the tube plate (11) and carries the steam nozzle (65) on its free end.

19. Heat exchanger according to claim 18, characterised in that the steam supply pipe (61) forms a 180° tube bend (64) in the process gas entry chamber (3), the limbs (62, 62') of the bend being parallel to the axis of the tube.

20. Heat exchanger according to claim 18 or 19, characterised in that the steam nozzle (65) and the steam supply pipe (61) in the portion adjacent to the steam nozzle (65) are enclosed concentrically with radial clearance in a casing tube (66) which terminates within the double-walled tube plate (10) below the water level (27) so that at this point water can enter the space (68) between the steam supply pipe (61) and the casing tube (66), that at the steam nozzle (65) the space (68) between the steam supply pipe (61) and the casing tube (66) is closed apart from an outlet (72), that a riser tube (73) is connected to the outlet (72) and is conducted back through the tube plate (11) into the double-walled tube plate (10) and opens in an open manner above the water level (27) a small distance from the tube plate (12) and that the resistance to flow for steam forming in the region of the process gas entry chamber in the intermediate space (68) through the riser tube (73) is smaller than through the intermediate space (68).

21. Heat exchanger according to claim 20, characterised in that the casing tube (66, 67) is enclosed in insulation (74) in the region of the process gas entry chamber (3).

22. Heat exchanger according to claim 20 or 21, characterised in that the casing tube (66) projects above the tube plate (11) to form an overflow for the water (28) present in the double-walled tube plate (10).

23. Heat exchanger according to one of claims 20 to 22, characterised in that the cross-section of the riser tube (73) is greater than the cross-section of the intermediate space (68) between the steam supply pipe (61) and casing tube (66).

24. Heat exchanger according to one of claims 1 to 23, characterised in that the underside (13), facing towards the process gas entry chamber (3), of the tube plate wall (11) belonging to the double-walled tube plate (10) has a refractory cladding (14) leaving openings (15) free leading to the individual tubes (10).

25. Heat exchanger according to claim 24, characterised in that the cladding (14) comprises regularly shaped refractory bodies (52) which between them cover the entire underside (13) of the tube plate (11) without any gaps.

## Revendications

1. Echangeur de chaleur destiné au refroidissement de gaz de procédé contenant des particules solides finement dispersées à des températures élevées comprises entre 800 et 1200°, en particulier pour la fabrication de noir de carbone, comportant :
un boîtier (1),
- dans ce boîtier un faisceau (50) de tubes parallèles (30) étroitement serrés les uns contre les autres et dans lesquels circulent les gaz du procédé,
- dans le boîtier (1) près des extrémités des tuyaux (30) et perpendiculairement à ceux-ci, des planchers à tubes occupant toute la section du boîtier (1) et que traversent de manière étanche les tubes (30) pour déboucher à l'extérieur en direction axiale, par leurs extrémités ouvertes,
- une chambre d'entrée (3) des gaz du procédé située dans le boîtier (1) à une extrémité et en direction axiale à l'extérieur du plancher à tubes se trouvant à cet endroit,
- une chambre de sortie (7) du gaz du procédé, située dans le boîtier (1) à l'autre extrémité et en direction axiale à l'extérieur du plancher à tubes (20) se trouvant à cet endroit,
- dans le boîtier (1), près d'un plancher à tubes (20) et sur le côté de celui-ci faisant face à l'autre plancher à tubes (10), une entrée (17) pour un fluide de refroidissement, et également, près de l'autre plancher à tubes (10) et sur le côté de celui-ci en regard du premier plancher (20), une sortie (24) pour le fluide de refroidissement,
- du côté de la chambre d'entrée des gaz (3) un plancher à tubes constitué d'un double plancher à tubes (10) que traversent les extrémités des tubes (30) et à l'intérieur duquel se trouve un agent de refroidissement,
caractérisé en ce que
le double plancher à tubes (10) agit en refroidisseur d'eau bouillante du fait que le double plancher à tubes (10) est horizontal et rempli partiellement d'eau, la chambre de vaporisation étant reliée à un condenseur externe (38) dont le condensat peut être ramené à l'intérieur du double plancher à tubes (10).

2. Echangeur de chaleur selon la revendication 1,
caractérisé en ce que
le condenseur (38) est refroidi à l'eau et qu'il est prévu, pour commander le débit de l'eau de refroidissement amenée au condenseur, un thermo-élément (42) mesurant la température de l'eau à l'intérieur de double plancher à tubes (10).

3. Echangeur de chaleur selon la revendication 1 ou 2,
caractérisé en ce que
les tubes (30) sont garnis intérieurement dans la zone du double plancher (10), d'une enveloppe de protection (48) montée libre.

4. Echangeur de chaleur selon une des revendications 1 à 3,
caractérisé en ce que
chaque tube (30), dans la zone du double plancher (10), est entouré, au moins sur une partie de la hauteur du double plancher à tubes (10), avec espacement de tous côtés, par un tube de séparation (35) relié de manière étanche aux planchers individuels (11, 12) du double plancher à tubes (10)

5. Echangeur de chaleur selon la revendication 4,
caractérisé en ce que
le volume d'espacement entre la face interne (35') du tube de séparation (35) et la face externe du tube (30) est rempli au moins partiellement par un matériau isolant résistant au feu.

6. Echangeur de chaleur selon une des revendications 4 et 5,
caractérisé en ce que
les tubes de séparation (35) sont verticaux et, dans la zone du double plancher à tubes (10), sont entourés concentriquement par une enveloppe (36) qui, à sa partie supérieure au moins, se trouve faiblement espacée radialement par rapport à la paroi externe du tube de séparation (35), un passage (54) conduisant à l'espace intermédiaire (55) situé entre la enveloppe (36) et le tube de séparation (35), étant prévu le long du bord inférieur de la douille tandis que le long du bord supérieur (36') de celle-ci, un passage relie l'espace intermédiaire (55) à la chambre de vaporisation du double plancher (10).

7. Echangeur de chaleur selon une des revendications 1 à 6,
caractérisé en ce qu'
- en dessous du plancher à tubes (20) délimitant la chambre de sortie (7) des gaz du procédé, se trouve un plancher à tubes intermédiaire (21) de manière à former une première chambre équipée d'un raccordement de fluide de refroidissement, et
- au-dessus du plancher à tubes (12) se trouve un plancher à tubes intermédiaire (22) de manière à former une seconde chambre équipée d'un raccordement de fluide de refroidissement,
- chaque tube (30) entre les planchers (10, 20) est entouré par une enveloppe tubulaire (40),
- les enveloppes (40) ont leurs extrémités ouvertes, d'un côté dans la première chambre à une certaine distance du plancher à tubes (20) et de l'autre côté dans la seconde chambre à une certaine distance du plancher à tubes (12), de sorte qu'à partir des deux chambres, il existe une communication avec les espaces intermédiaires (58) situés entre les tubes (30) et leurs enveloppes (40), le fluide de refroidissement pouvant passer d'une chambre à l'autre en traversant l'espace intermédiaire (58) situé entre la face externe du tube (30) et la face interne de l'enveloppe (40).

8. Echangeur de chaleur selon la revendication 7,
caractérisé en ce que
la première chambre constitue la chambre (16) d'introduction du fluide de refroidissement avec son entrée (17) tandis que la seconde chambre constitue la chambre (23) d'extraction du fluide de refroidissement avec sa sortie (24).

9. Echangeur de chaleur selon la revendication 8,
caractérisé en ce que
les enveloppes (40), à leurs extrémités situées à l'extérieur du plancher intermédiaire (21) dans la chambre (16) d'introduction du fluide de refroidissement, présentent des bords en entonnoir raccordés de manière étanche à l'extérieur du plancher (21).

10. Echangeur de chaleur selon une des revendications 7 à 9,
caractérisé en ce que
dans l'espace intermédiaire (58) situé entre la face externe du tube (30) et la face interne de l'enveloppe (40) se trouvent des surfaces supplémentaires de transmission de chaleur (60, 60') en contact avec la paroi externe du tube (30).

11. Echangeur de chaleur selon revendication 10,
caractérisé en ce que
les surfaces supplémentaires de transmission de chaleur (60), sont constituées par un profilé en tôle (59) tubulaire dessinant des ondulations dans un plan perpendiculaire à l'axe du tube et en appui sur la paroi externe du tube (30) par les sommets ondulés s'étendant en direction de l'axe du tube.

12. Echangeur de chaleur selon la revendication 9,
caractérisé en ce que
les surfaces supplémentaires de transmission de chaleur (60') sont constituées par des tiges (59'), des barrettes ou des nervures qui sont réparties à la périphérie externe du tube (30) et en conduction thermique avec ce tube, tout en laissant un passage libre permettant l'écoulement du fluide de refroidissement à travers l'espace intermédiaire (58).

13. Echangeur de chaleur selon une des revendications 1 à 12,
caractérisé en ce que
les tubes (30) sont reliés fixement et de manière étanche au double plancher à tubes (10), absorbant la dilatation thermique de chaque tube (30) étant prévu sur le plancher à tubes (20) délimitant la chambre (7) d'extraction des gaz du procédé.

14. Echangeur de chaleur selon une des revendications 1 à 13,
caractérisé en ce qu'
à une extrémité de chaque tube (30) est associé un dispositif de nettoyage à la vapeur qui, pour débarrasser la paroi interne du tube des matières déposées sur elle, envoie dans le tube (30), à des intervalles choisis librement, un jet de vapeur.

15. Echangeur de chaleur selon la revendication 14,
caractérisé en ce que
le dispositif de nettoyage à la vapeur (33) est monté à l'extrémité (30') de chaque tube (30) 'dépassant à l'intérieur de la chambre (7) d'extraction des gaz du procédé.

16. Echangeur de chaleur selon la revendication 14,
caractérisé en ce que
le dispositif de nettoyage à la vapeur (63) est monté à l'extrémité débouchant dans la chambre (3) d'introduction des gaz du procédé, de chaque tube (30).

17. Echangeur de chaleur selon la revendication 16,
caractérisé en ce qu'
en amont de l'embouchure de chaque tube (30) dans la chambre (3) d'introduction des gaz du procédé, se trouve une tuyère à vapeur (65), concentrique à l'axe du tube, dirigée vers l'intérieur de celui-ci et gênant peu l'écoulement des gaz du procédé dans le tube (30), tuyère à vapeur dont la conduite de vapeur (61) est amenée dans la section voisine de la tuyère (65) à travers la chambre (3) d'introduction des gaz.

18. Echangeur de chaleur selon la revendication 17,
caractérisé en ce que
la conduite (61) d'amenée de vapeur passe à l'intérieur du double plancher à tubes (10) jusqu'à proximité du tube concerné (30), puis de là, descend à travers le plancher à tubes (11) proche de la chambre (3) d'introduction du gaz pour pénétrer dans cette chambre où elle se replie en direction du plancher à tubes (11) et porte à son extrémité libre la tuyère à vapeur (65).

19. Echangeur de chaleur selon la revendication 18,
caractérisé en ce que
la conduite (61) amenant la vapeur dans la chambre d'introduction des gaz (3) présente un coude à 180° dont les deux branches (62, 62') sont parallèles à l'axe du tube.

20. Echangeur de chaleur selon la revendication 18 ou 19,
caractérisé en ce que
- la tuyère à vapeur (65) et la conduite d'amenée de vapeur (61) sont, dans la partie proche de la tuyère à vapeur (65) entourées concentriquement avec un intervalle radial par un tube-enveloppe (66) se terminant à l'intérieur du double plancher à tubes (10) en dessous du niveau de l'eau (27), de sorte qu'à cet endroit de l'eau peut entrer dans l'espace intermédiaire (68) situé entre la conduite d'amenée de vapeur (61) et le tube-enveloppe (66),
- à la tuyère à vapeur (65) l'espace intermédiaire (68) entre la conduite d'amenée de la vapeur (61) et le tube-enveloppe (66) est fermé jusqu'au niveau d'une sortie (72) - est raccordé à la sortie (72) un tube ascendant (73) revenant à travers le plancher (11) à l'intérieur du double plancher à tubes (10) et débouchant par son extrémité ouverte au-dessus du niveau de l'eau (27) mais à faible distance du plancher à tubes
- la résistance à l'écoulement dans le tube ascendant (73), de la vapeur qui se trouve dans l'espace intermédiaire (68) dans la zone de la chambre d'introduction des gaz du procédé, est inférieure à la résistance à l'écoulement à travers l'espace intermédiaire (68).

21. Echangeur de chaleur selon la revendication 20,
caractérisé en ce que
le tube-enveloppe (66, 67) est entouré par une isolation (74) dans la zone de la chambre (3).

22. Echangeur de chaleur selon la revendication 20 ou 21,
caractérisé en ce que
le tube-enveloppe (66) dépasse au-dessus du plancher à tubes (11) de manière à créer un déversoir pour l'eau (28) se trouvant à l'intérieur du double plancher à tubes (10).

23. Echangeur de chaleur selon une des revendications 20 à 22,
caractérisé en ce que
la section du tube ascendant (73) est supérieure à la section de l'espace intermédiaire (68) entre la canalisation (61) d'amenée de vapeur et le tube-enveloppe (66).

24. Echangeur de chaleur selon l'une des revendications 1 à 23,
caractérisé en ce que
la face inférieure (13) du plancher à tubes (11) appartenant au double plancher (10) et faisant face à la chambre (3) d'introduction des gaz du procédé, porte un revêtement (14) résistant au feu et laissant libres les passages (15) conduisant aux différents tubes (10).

25. Echangeur de chaleur selon la revendication 24,
caractérisé en ce que
le revêtement (14) est composé d'éléments moulés (52) résistants au feu, de forme régulière, dont l'ensemble assure une couverture sans lacune de toute la face inférieure (13) du plancher à tubes (11).
